# FASCICULE DE BREVET EUROPEEN

(11) **EP 4 016 468 B1**
(45) Date de publication et mention de la délivrance du brevet: **05.08.2026**
(21) Numéro de dépôt: 21215250.8
(22) Date de dépôt: 16.12.2021
(51) Int. Cl.: G06T 19/00

(54) **PROCÉDÉ DE GESTION DE L AFFICHAGE D'AU MOINS UNE INFORMATION, PRODUIT PROGRAMME D'ORDINATEUR, SUPPORT D'INFORMATION ET SYSTÈME D'AFFICHAGE ASSOCIÉS**
VERFAHREN ZUR VERWALTUNG DER ANZEIGE MINDESTENS EINER INFORMATION, ENTSPRECHENDES COMPUTERPROGRAMMPRODUKT, ANZEIGESYSTEM UND ENTSPRECHENDER INFORMATIONSDATENTRÄGER
METHOD FOR MANAGING THE DISPLAY OF AT LEAST ONE ITEM OF INFORMATION, ASSOCIATED COMPUTER PROGRAM PRODUCT, INFORMATION MEDIUM AND DISPLAY SYSTEM

(30) Priorité: 16.12.2020 FR 2013371
(43) Date de publication de la demande: 22.06.2022
(73) Titulaire: Schneider Electric Industries SAS, 92500 Rueil-Malmaison (FR)
(72) Inventeur: NEYRET, Yannick, 38330 BIVIERS (FR); GASSION, Romain, 38140 IZEAUX (FR); MEFTAH, Tewfik, 38100 GRENOBLE (FR); CHICHE, Thierry, 38330 SAINT ISMIER (FR)
(74) Mandataire: Lavoix

(56) Documents cités:
- RAMBACH JASON ET AL: "6DoF Object Tracking based on 3D Scans for Augmented Reality Remote Live Support", vol. 7, no. 1, 2 January 2018 (2018-01-02), pages 6, XP055833934, Retrieved from the Internet <URL:https://www.dfki.de/fileadmin/user_upload/import/9441_computers-07-00006.pdf> DOI: 10.3390/computers7010006
- WITHER J ET AL: "Annotation in outdoor augmented reality", COMPUTERS AND GRAPHICS, ELSEVIER, GB, vol. 33, no. 6, 1 December 2009 (2009-12-01), pages 679 - 689, XP026791205, ISSN: 0097-8493, [retrieved on 20090617]
- SAM CORBETT-DAVIES ET AL: "Physically interactive tabletop augmented reality using the Kinect", IMAGE AND VISION COMPUTING NEW ZEALAND, ACM, 2 PENN PLAZA, SUITE 701 NEW YORK NY 10121-0701 USA, 26 November 2012 (2012-11-26), pages 210 - 215, XP058030046, ISBN: 978-1-4503-1473-2, DOI: 10.1145/2425836.2425880

## Description

### Domaine Technique:

La présente invention concerne un procédé de gestion de l'affichage d'au moins une information. La présente invention concerne également un produit programme d'ordinateur, un support d'informations et un système d'affichage associés.

### L'état de l'art antérieur:

Dans de nombreux domaines industriels, il est connu de superposer à une image ou à une pluralité d'images formant une vidéo, d'un équipement industriel un modèle virtuel contenant des informations relatives à l'équipement de cet équipement pour former une nouvelle image sur laquelle les informations relatives à l'équipement sont visibles sur l'image de l'équipement.

Une telle image est appelée image enrichie, et un tel procédé d'affichage est appelé « réalité augmentée ». Les informations sont, par exemple, des commentaires sur les fonctions de différents composants ou organes de l'équipement, ou encore des indications de liens entre ces composants, par exemple une représentation d'un circuit électrique reliant deux composants apparaissant chacun sur la face avant de l'équipement.

Ainsi, il est possible de générer une représentation d'un lieu contenant un ou plusieurs équipements, et permettant à un opérateur intervenant dans ce lieu d'obtenir aisément des informations sur les différents équipements, de manière à faciliter cette intervention même pour un opérateur ne connaissant pas les différents équipements.

Ces modèles sont en général conçus à partir des plans des équipements afin d'être très précis et de permettre un positionnement optimisé des différents points d'intérêt, c'est-à-dire des points de l'équipement associés aux informations affichées. Toutefois, il est long et complexe de générer ces modèles, qui représentent une quantité de données importante, difficile à transmettre entre différents dispositifs et à manipuler pour chacun de ces dispositifs.

L'article « 6DoF Object Tracking based on 3D Scans for Augmented Reality Remote Live Support » de Jason Rambach et al, publié en 2018 dans la revue Computers, décrit un procédé de suivi d'objets 3D en réalité augmentée.

L'article « Annotation in outdoor augmented reality » de Jason Wither et al, publié en 2009 dans le journal Computers&Graphics, décrit un procédé de réalité augmentée avec l'ajout d'annotations en ligne.

Dans certains cas, il est également connu de générer directement une représentation du lieu contenant les différents équipements, sans générer de représentation de chaque équipement, mais simplement en positionnant dans l'espace une photographie de chaque équipement et en disposant les différents points d'intérêt sur ces photographies. Cependant, le positionnement précis des différentes photographies est difficile en l'absence de points de repère. En conséquence, si des changements interviennent sur l'un des équipements, il est difficile de les traduire dans le modèle puisqu'il est nécessaire de repositionner la photographie dans l'espace.

Il existe donc un besoin pour un procédé d'affichage d'une information qui permette une génération simple d'un modèle permettant un positionnement précis des informations ajoutées, tout en assurant que le modèle ainsi généré soit simple à traiter.

### Résumé de l'invention:

A cet effet, il est proposé un procédé de gestion de l'affichage, sur un écran d'ur système électronique, d'au moins une information relative à un équipement disposé dans un lieu, selon la revendication 1.

Selon des modes de réalisation avantageux mais non obligatoires, le procédé comporte une ou plusieurs des caractéristiques des revendications 2 à 5.

Il est également proposé un support d'informations sur lequel sont mémorisées des instructions logicielles configurées pour mettre en œuvre un procédé tel que précédemment décrit lorsque les instructions sont exécutées sur un processeur.

Il est également proposé un système d'affichage d'informations comportant une unité de traitement d'informations, une mémoire, au moins un imageur selon la revendication 8.

Des caractéristiques et avantages de l'invention apparaîtront à la lecture de la description qui va suivre, donnée uniquement à titre d'exemple non limitatif et faite en référence aux dessins annexés, sur lesquels :

### Dessins:

[Fig 1] La figure 1 est une vue en perspective de deux équipements,
[Fig 2] la figure 2 est une vue schématique d'un système de gestion de l'affichage d'au moins une information selon l'invention,
[Fig 3] la figure 3 est un ordinogramme des étapes d'un procédé de gestion de l'affichage mis en œuvre par le système de la figure 2,
[Fig 4] la figure 4 est une vue d'un ensemble d'images des équipements de la figure 1,
[Fig 5] la figure 5 est une vue de gabarits des équipements de la figure 1, générés par le système de la figure 2,
[Fig 6] la figure 6 est une vue de représentations des équipements de la figure 1, générées par le système de la figure 2, et
[Fig 7] la figure 7 est une vue d'une image des équipements de la figure 1, sur laquelle au moins une information est affichée par le système de la figure 2.

### Description détaillée:

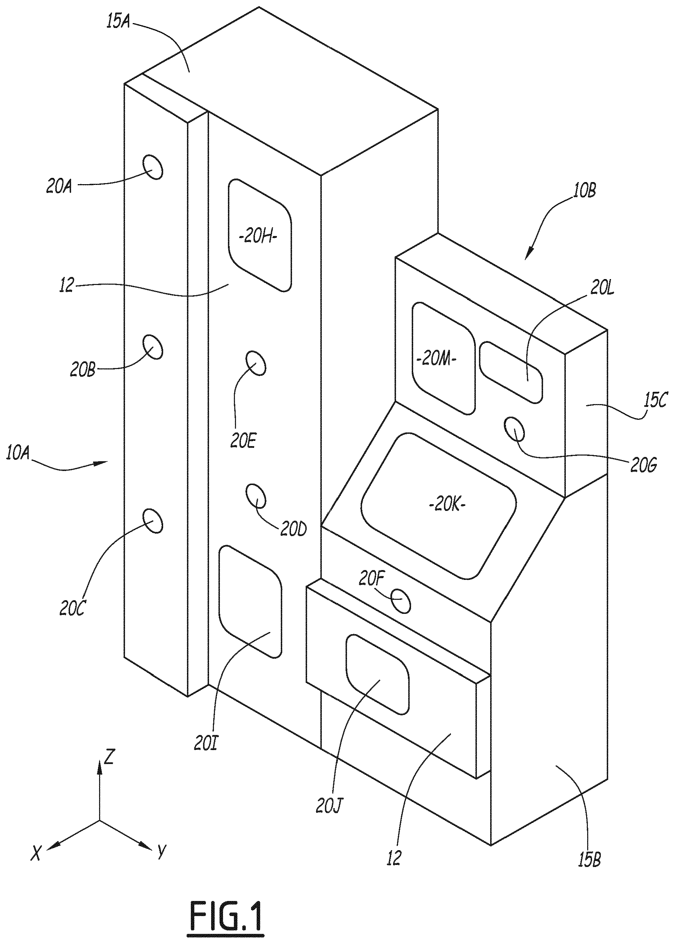

Deux équipements 10A, 10B sont représentés sur la figure 1.

Chaque équipement 10A, 10B est, par exemple, un équipement électrique ou électronique.

En particulier, au moins un équipement 10A, 10B est un équipement industriel, par exemple un tableau électrique moyenne tension, une cellule de protection moyenne tension, un tableau de répartition électrique basse tension ou encore un système de commutation d'une source d'électricité basse tension vers une autre.

Chaque équipement 10A, 10B présente une pluralité de faces 12.

Chaque équipement 10A, 10B est disposé dans un lieu contenant, par exemple, au moins un autre équipement 10A, 10B.

Il est défini trois directions X, Y et Z, perpendiculaires les unes aux autres, pour le lieu contenant les équipements 10A et 10B. La direction Z est une direction verticale du lieu.

Chaque équipement 10A, 10B comporte, par exemple, un boîtier 15A, 15B, 15C ou une pluralité de boîtiers 1515A, 15B, 15C, un ensemble d'organes 20A à 20M visibles disposés chacun sur une face externe du ou d'un boîtier 15A, 15B, 15C et un ensemble d'organes disposés à l'intérieur du ou d'un boîtier 15A, 15B, 15C.

Chaque boîtier 15A, 15B, 15C est configuré pour isoler de l'extérieur le ou les organes disposé(s) dans le boîtier 15A, 15B, 15C.

Dans l'exemple représenté sur la figure 1, l'équipement 10A comporte un unique boîtier 15A, et l'équipement 10B comporte deux boîtiers 15B et 15C superposés, toutefois leur nombre et leur disposition sont susceptibles de varier.

Chaque organe visible 20A à 20M est porté par une face 12 de l'équipement 10A, 10B de manière à être accessible par un opérateur depuis l'extérieur de l'équipement 10A, 10B considéré.

Dans la suite, il va être considéré que chaque organe visible 20A à 20M est porté par une face 12 délimitant l'équipement 10A selon la direction X. Par exemple, chaque face 12 est perpendiculaire à la direction X, à l'exception d'une face du boîtier 15C, portant l'organe 20K, dont une direction normale est comprise dans un plan contenant les directions X et Z.

Il est à noter que selon des variantes envisageables, des faces délimitant les équipements 10A, 10B selon les directions Y ou Z sont également susceptibles de porter un ou des organes 20A à 20M.

Chaque organe 20A à 20G est, par exemple, un connecteur configuré pour connecter un dispositif à l'équipement 10A, 10B, un organe d'actionnement de l'équipement 10A, 10B tel qu'une poignée pour ouvrir une porte ou une trappe de l'équipement 10A, 10B, ou encore un organe de commande de l'équipement 10A, 10B.

Chaque organe 20H à 20M est, par exemple, un organe de signalisation ou d'affichage configuré pour transmettre une information de l'équipement 10A, 10B à un opérateur.

Il est à noter que les organes 20A à 20M peuvent être de natures diverses et différer des exemples donnés ici.

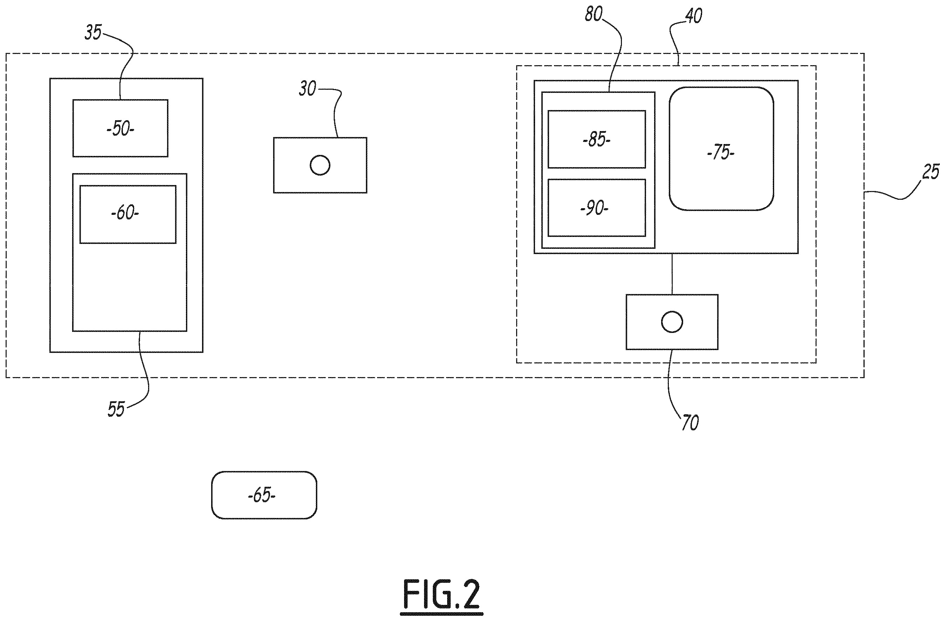

La figure 2 fait apparaître un exemple de système 25 de gestion de l'affichage d'au moins une information relative à chaque équipement 10A, 10B.

Le système 25 comporte un premier imageur 30, un premier contrôleur 35 et un dispositif d'affichage 40.

Il est à noter que, bien que la figure 2 représente ces trois dispositifs 30, 35 et 40 comme étant des dispositifs distincts, il est envisageable qu'un unique dispositif joue le rôle de deux ou trois éléments parmi le premier imageur 30, un premier contrôleur 35 et un dispositif d'affichage 40. Par exemple, le dispositif d'affichage 40 est susceptible de jouer le rôle de premier imageur 30 et/ou de premier contrôleur 35.

Le premier imageur 30 est configuré pour acquérir au moins une première image 45 de chaque équipement 10A, 10B, par exemple pour acquérir une pluralité d'images 45 successives de chaque équipement 10A, 10B.

Le premier imageur 30 est, en outre, configuré pour transmettre la ou les première(s) image(s) 45 au contrôleur 35, soit directement par une liaison de données avec ou sans fil, soit par l'intermédiaire d'un support d'informations tel qu'un disque dur, une disquette, ou encore une mémoire ROM ou RAM telle qu'une carte SD ou une clé USB.

Le premier imageur 30 est, par exemple, intégré à un appareil photographique, une caméra, ou encore un téléphone mobile ou une tablette électronique.

Le premier imageur 30 est, par exemple, un capteur matriciel tel qu'un capteur CCD (de l'Anglais « Charge-Coupled Device) ou un capteur CMOS (de l'Anglais « Complementary Metal-Oxide Semiconductor »).

Le premier contrôleur 35 est configuré pour mettre en œuvre un procédé de gestion de l'affichage d'au moins une information relative à au moins un équipement 10A, 10B.

Le premier contrôleur 35 est une unité de traitement de données propre à manipuler et modifier des données sous la forme de signaux électriques. Les termes « contrôleur » et « unité de traitement d'informations » seront considérés comme synonymes dans la présente description.

Le premier contrôleur 35 comporte un premier processeur 50 et une première mémoire 55.

La première mémoire 100 contient un premier produit programme d'ordinateur 60.

Le premier produit programme d'ordinateur 60 contient des instructions logicielles configurées pour provoquer la mise en œuvre du procédé précité lorsque les instructions logicielles sont exécutées sur le premier processeur 50.

Le premier produit programme d'ordinateur 60 a, par exemple, été copié antérieurement dans la première mémoire 55 à partir d'un support lisible d'informations 65.

Un support lisible d'informations 65 est un support lisible par le dispositif 10, usuellement par le premier contrôleur 35. Le support lisible d'informations 65 est un médium adapté à mémoriser des instructions électroniques et capables d'être couplé à un bus d'un dispositif informatique.

A titre d'exemple, le support lisible d'informations 65 est un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations 65 est mémorisé le premier programme 60 comprenant des instructions de programme.

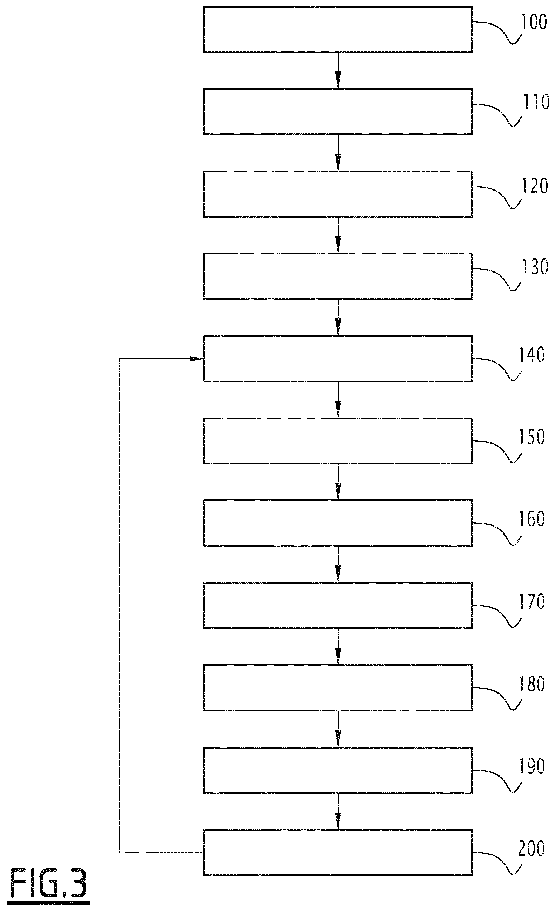

Selon une variante, le premier contrôleur 35 est formé par un ou des circuit(s) intégré(s) dédié(s), ou encore par un ensemble de composants logiques programmables, tout en restant configuré pour mettre en œuvre le procédé de gestion d'affichage qui sera décrit en référence à la figure 3.

Le dispositif d'affichage 40 est, par exemple, un dispositif mobile tel qu'une tablette, une paire de lunettes intelligentes, ou encore un téléphone mobile.

Le dispositif d'affichage 40 comporte un deuxième imageur 70, un écran d'affichage 75 et un deuxième contrôleur 80.

Le deuxième imageur 70 est configuré pour acquérir des images et les transmettre au deuxième contrôleur 80.

Le deuxième contrôleur 80 est, par exemple, un contrôleur distinct du premier contrôleur 35 et embarqué dans le dispositif d'affichage 40. Il est à noter que selon une variante envisageable, les fonctions du deuxième contrôleur 80 sont réalisées par le premier contrôleur 35, par exemple via une liaison de données à distance entre le premier contrôleur 35, le deuxième imageur 70 et l'écran 75.

Le deuxième contrôleur 80 est configuré pour mettre en œuvre le procédé de gestion de l'affichage d'au moins une information relative à au moins un équipement 10A, 10B, en coopération avec le premier contrôleur 35.

Le deuxième contrôleur 80 comporte un deuxième processeur 85 et une deuxième mémoire 90.

La deuxième mémoire 90 contient un deuxième produit programme d'ordinateur, qui forme par exemple une partie du premier produit programme d'ordinateur.

Le deuxième produit programme d'ordinateur contient des instructions logicielles configurées pour provoquer la mise en œuvre du procédé précité lorsque les instructions logicielles sont exécutées sur le deuxième processeur 85.

Le deuxième produit programme d'ordinateur a, par exemple, été copié dans la deuxième mémoire 90 à partir d'un support lisible d'informations 65.

Selon une variante, le deuxième contrôleur 80 est formé par un ou des circuit(s) intégré(s) dédié(s), ou encore par un ensemble de composants logiques programmables, tout en restant configuré pour mettre en œuvre le procédé de gestion d'affichage qui sera décrit en référence à la figure 3.

Un exemple de procédé de gestion de l'affichage d'au moins une information, mis en œuvre par le système 25, va maintenant être décrit en référence à la figure 3, qui présente un ordinogramme des étapes de ce procédé.

Le procédé de gestion de l'affichage comprend une première étape 100 de fourniture, une première étape 110 de génération, une première étape 120 de superposition, une première étape 130 de positionnement, une deuxième étape 140 de fourniture, une étape 150 de détection, une deuxième étape 160 de génération, une étape 170 d'affichage, et optionnellement une troisième étape 180 de fourniture, une deuxième étape 190 de superposition et une deuxième étape 200 de positionnement.

Lors de la première étape de fourniture 100, au moins une première image 45 d'au moins un équipement 10A, 10B est fournie, par exemple une pluralité de premières images 45.

Par exemple, une unique image du lieu contenant plusieurs premières images 45 de différentes parties de chaque équipement 10A, 10B est fournie, ou plusieurs premières images 45 sont acquises séparément.

Chaque première image 45 est, par exemple, une première image 45 d'une face 12 d'un équipement 10A, 10B, sur laquelle les différents organes 20A à 20M portés par cette face sont visibles.

Chaque première image 45 est, par exemple, acquise par un opérateur à l'aide du premier imageur 30 et transmise au premier contrôleur 35.

Il est à noter que la ou les première(s) image(s) sont susceptibles d'être acquises et fournies au premier contrôleur 35 de nombreuses façons distinctes, par exemple d'être acquises automatiquement par le premier imageur 30 placé sur un support rotatif commandé par le premier contrôleur 35.

Chaque première image 45 est, par exemple, une image acquise en plaçant le premier imageur 30 en regard de l'équipement 10A, 10B de manière à ce que l'axe optique du premier imageur 30 soit perpendiculaire à une direction X, Y ou Z, notamment à la direction X.

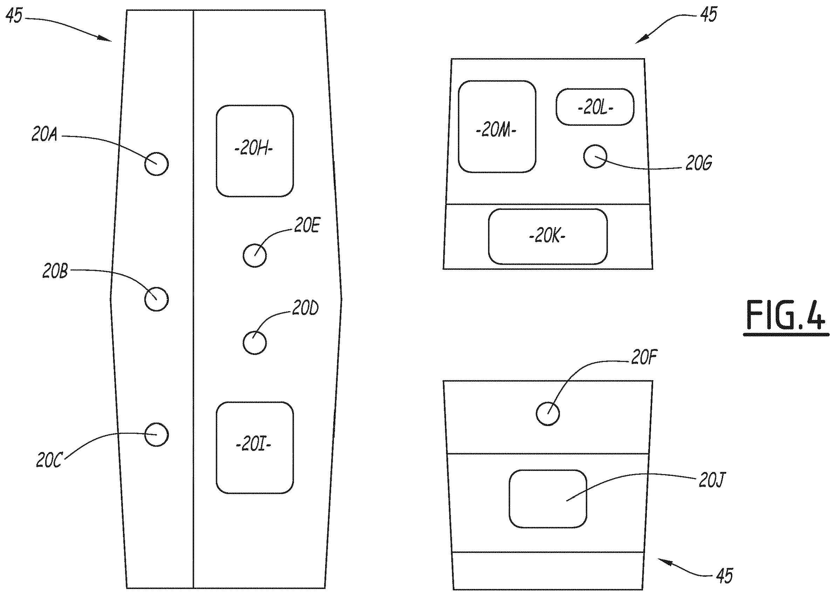

Trois premières images 45 des équipements 10A, 10B sont représentées sur la figure 4. Afin d'en faciliter l'identification, les différents organes 20A à 20M apparaissant sur les premières images 45 ont été identifiés par les références correspondantes.

Chaque première image 45 est, par exemple, obtenue en acquérant, à l'aide du premier imageur 30, une image du lieu et en supprimant de l'image les parties de l'image ne représentant pas l'équipement 10A, 10B ou la partie de l'équipement 10A, 10B que l'on souhaite représenter.

Comme visible sur la figure 4, les premières images 45 des équipements 10A, 10B sont légèrement déformées par des effets de perspective, qui tendent à en affiner certaines extrémités par rapport à d'autres ou au centre des images.

Au cours de la première étape de génération 110, une représentation du lieu est générée dans la mémoire 55 par le contrôleur 30.

La représentation comporte un gabarit 210 d'au moins un équipement 10A, 10B, par exemple un gabarit 210 de chaque équipement 10A, 10B.

Il est entendu par « gabarit » un modèle simplifié d'un équipement 10A, 10B respectant notamment au moins certaines des dimensions de l'équipement 10A, 10B considéré.

En particulier, au moins une hauteur maximale (selon la direction verticale Z) et une largeur maximale (selon la direction Y) de l'équipement 10A, 10B sont égales respectivement à la hauteur et la largeur maximales du gabarit 215 de cet équipement 10A, 10B.

Par exemple, l'opérateur mesure les dimensions de chaque équipement 10A, 10B et transmet les dimensions au contrôleur 30 pour génération du gabarit 210.

En variante, les dimensions des équipements 10A, 10B sont mesurées par le premier imageur 30, ou encore calculées par le contrôleur 30 à partir des premières images 45.

Chaque gabarit 210 comporte au moins un parallélépipède 215A, 215B, 215C. Il est à noter que le nombre de parallélépipèdes utilisés est susceptible de varier.

En particulier, le gabarit 210 est constitué d'un parallélépipède 215A, 215B, 215C ou d'une pluralité de parallélépipèdes 215A, 215B, 215C.

Lorsque le gabarit 210 comporte une pluralité de parallélépipèdes 215A, 215B, 215C, au moins deux des parallélépipèdes 215A, 215B, 215C sont, par exemple, en contact par deux de leurs faces respectives.

Lors de la première étape de génération 110, chaque gabarit 210 est, par exemple, généré sur commande d'un opérateur qui commande la génération de chaque parallélépipède 215A, 215B, 215C en entrant ses dimensions dans le contrôleur 30, par exemple via une interface homme-machine du contrôleur 35, et en modifiant le positionnement relatif des différents parallélépipèdes 215A, 215B, 215C pour former le gabarit 210 de chaque équipement 10A, 10B.

Par exemple, le premier contrôleur 35 comporte un module de génération, formé par exemple par l'exécution d'une partie des instructions logicielles du produit programme d'ordinateur 60, et propre à générer et à positionner chaque parallélépipède 215A, 215B, 215C dans la représentation du lieu en fonction des commandes de l'opérateur. Par exemple, le module de génération propose à l'opérateur, via l'interface homme-machine du premier contrôleur 35, de générer un parallélépipède 215A, 215B, 215C, de définir ses dimensions et de le positionner dans la représentation du lieu, puis lorsque ce parallélépipède 215A, 215B, 215C a été défini, dimensionné et positionné, de répéter ces opérations avec un nouveau parallélépipède 215A, 215B, 215C.

Chaque parallélépipède 215A, 215B, 215C présente six faces délimitant le parallélépipède 215A, 215B, 215C.

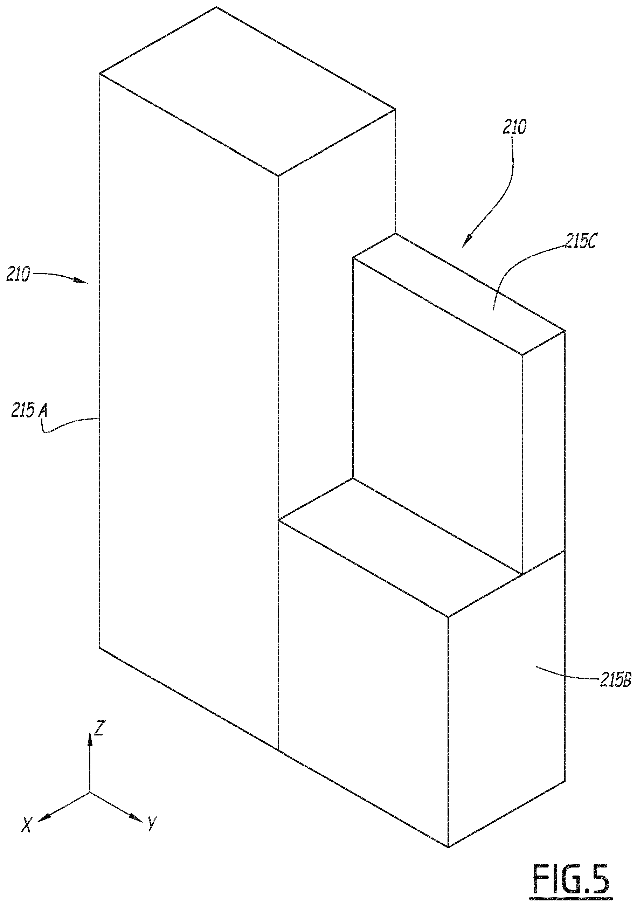

Deux gabarit 210 sont représentés sur la figure 5. Un gabarit 210 de l'équipement 10A comporte un seul parallélépipède 215A et l'autre gabarit, qui est un gabarit 210 de l'équipement 10B, comporte deux parallélépipèdes 215B et 2015C superposés selon la direction verticale Z.

Par exemple, chaque parallélépipède 215A, 215B, 215C correspond à un boîtier 15A, 15B,15C respectif, et les parallélépipèdes 215A à 215C sont disposés les uns par rapport aux autres de manière similaire aux boîtiers 15A, 15B, 15C.

Il est à noter que, dans un mode de réalisation, plusieurs parallélépipèdes peuvent correspondre à un unique boîtier 15A, 15B, 15C, par exemple si la forme de ce boitier est complexe. Par exemple, le boîtier 15A, comportant une partie en saillie sur la face 12 le délimitant selon la direction X, comme visible sur la figure 1, aurait pu correspondre à un gabarit 215A formé de deux parallélépipèdes, le parallélépipède 215A et un autre parallélépipède représentant la saillie.

En variante un unique parallélépipède 215A, 215B, 215C peut correspondre à une pluralité de boîtiers 15A, 15B, 15C distincts, si le parallélépipède peut à lui seul représenter de manière acceptable l'ensemble de ces boîtiers.

Par exemple, un unique parallélépipède est susceptible de former un gabarit pour un ensemble de plusieurs équipements 10A, 10B.

De manière générale, l'opérateur sélectionne le nombre, la taille et le positionnement respectif du ou des parallélépipède(s) 215A à 215C de manière à obtenir un gabarit 210 dont les dimensions correspondent à celles de l'équipement 10A, 10B correspondant et présentant une forme suffisamment proche de celle de l'équipement 10A, 10B pour permettre un positionnement acceptable de points d'intérêt 225, comme il sera décrit ci-dessous.

Le parallélépipède 215B forme un gabarit du boîtier 15B, et le parallélépipède 215C un gabarit du boîtier 15C.

Le parallélépipède 215A présente, par exemple, une largeur et une hauteur identiques à la largeur et à la hauteur de l'équipement 10A, notamment du boîtier 15A.

La profondeur du parallélépipède 215A est, par exemple, égale à la profondeur minimale de l'équipement 10A, bien que la profondeur de chaque parallélépipède 215A, 215B, 215C soit susceptible de varier. Il est entendu par « profondeur minimale » la plus petite dimension extérieure de l'équipement 10A selon la direction X. Selon une variante, la profondeur du parallélépipède 215A est la profondeur maximale de l'équipement 10A, c'est-à-dire la plus grande dimension extérieure selon la direction X, en encore comprise entre les profondeurs minimale et maximale de l'équipement 10A.

Le parallélépipède 215B correspond au boîtier 15B et présente la même largeur et la même profondeur que le boîtier 15B.

Le parallélépipède 215C correspond au boîtier 15C et présente la même largeur et la même profondeur que le boîtier 15C. Le parallélépipède 215C présente, par exemple, une profondeur égale à la profondeur minimale du boîtier 15C.

Chaque parallélépipède 215A, 215B, 215C est disposé de manière à ce que chacune de ses faces soit perpendiculaire à l'une des directions X, Y et Z.

Ainsi, chaque parallélépipède 215A à 215C présente une face perpendiculaire à la direction X et correspondant à une face 12 portant un ou des organes 20A à 20M de l'équipement 10A, 10B correspondant au parallélépipède considéré.

De manière générale, chaque face de chaque parallélépipède 215A, 215B, 215C délimite le parallélépipède selon l'une des directions X, Y et Z et correspond à une ou plusieurs faces 12 délimitant selon la même direction X, Y ou Z l'équipement 10A, 10B auquel le parallélépipède est associé. Chaque face de chaque parallélépipède 215A, 215B, 215C représente alors, dans le gabarit 210 d'un équipement 10A, 10B, une ou plusieurs faces 12 délimitant selon la même direction X, Y ou Z l'équipement 10A, 10B.

La représentation du lieu comporte, en outre, des informations spatiales relatives au positionnement des différents gabarits 210 dans l'espace les uns par rapport aux autres, de manière à permettre la superposition de la représentation sur une image du lieu. Ces informations sont, par exemple, des informations de positionnement absolues, permettant de positionner chaque point de chaque gabarit 210 par rapport à un ou des points de référence du lieu.

Au cours de la première étape de superposition 120, au moins une première image 45 d'un équipement 10A, 10B est superposée à une face du gabarit 210 de l'équipement 10A, 10B. Par exemple, une première image 45 respective est superposée, dans la représentation, à chaque face des gabarits 210 correspondant à une face 12 portant un organe 20A à 20M des équipement(s) 10A et 10B.

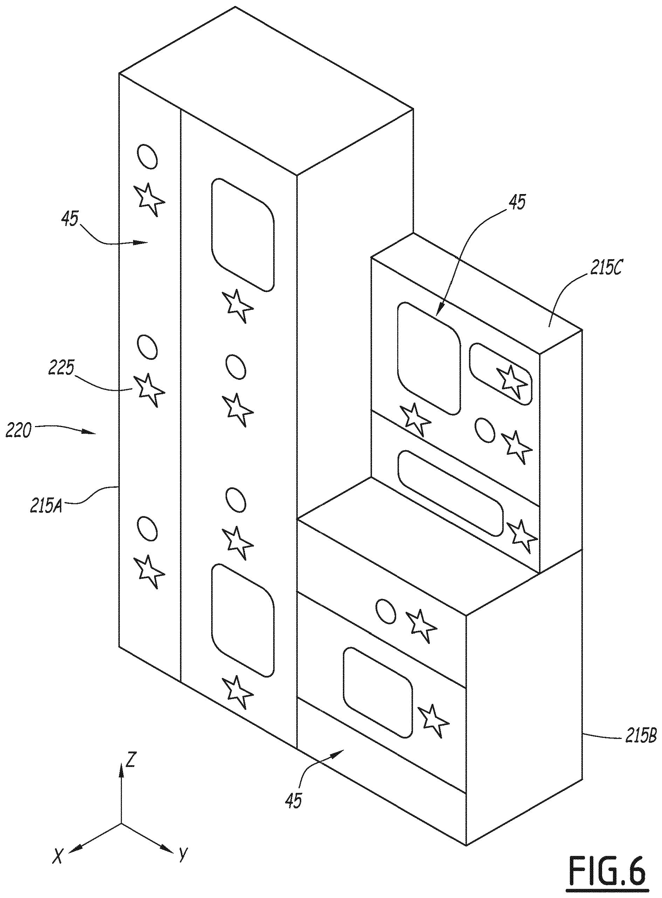

A l'issue de la première étape de superposition 120, il est obtenu une représentation 220 du ou des équipement(s) 10A, 10B, représentée sur la figure 6. La représentation 220 est formée des parallélépipèdes 215A, 215B, 215C et des premières images 45 superposées sur au moins certaines des faces des 215A, 215B, 215C.

La représentation du lieu contient, en particulier, les représentations 220 de chaque équipement 10A, 10B qui ont été générées.

Selon un mode de mise en œuvre, la première étape de superposition 120 comporte un redressement d'au moins une première image 45 antérieurement à la superposition. Il est entendu par « redressement » une modification de la première image 45 permettant de corriger les effets de perspective. Un redressement effectue, par exemple, une homologie entre la première image 45 acquise et la première image 45 redressée.

Chaque première image 45 est, notamment, redressée de manière à faire coïncider les coins de chaque première image 45 aux coins de la face du parallélépipède 215A, 215B, 215C à laquelle elle est superposée.

Le redressement est, par exemple, effectué sur commande de l'opérateur, ou encore automatiquement par le contrôleur 35.

La première étape de superposition 120 est, par exemple, mise en œuvre sur commande de l'opérateur par un module de superposition du contrôleur 35, par exemple formé par une partie des instructions logicielles du programme 60, ce module proposant à l'opérateur de sélectionner une face d'un parallélépipède 215A, 215B, 215C et une première image 45, et superposant l'image 45 sélectionnée à la face sélectionnée en la redressant si nécessaire.

Il est à noter que, au cours de la première étape de superposition 120, une ou plusieurs des faces des gabarits 210 sont susceptibles d'être laissées vierges, c'est-à-dire de ne pas se voir superposer de première image 45 correspondante, et une seule ou une pluralité de faces des gabarits 210 se voient superposer chacune une première image 45 correspondante.

Lors de la première étape de positionnement 130, le premier contrôleur 35 positionne au moins un point d'intérêt 225 dans la représentation 220.

Les différents points d'intérêt 225 sont représenté sur la figure 6 par des étoiles.

Chaque point d'intérêt 225 est une indication graphique dans la représentation 220, associée à un élément ou à un emplacement d'un équipement 10A, 10B pour lequel des informations existent.

Chaque point d'intérêt 225 est, par exemple, associé à un organe 20A à 20M de l'équipement 10A, 10B considéré.

Chaque point d'intérêt 225 comprend la ou les informations associées à l'élément correspondant.

Chaque point d'intérêt 225 est configuré pour, lorsque la représentation 220 est affichée sur un écran, permettre à un opérateur d'accéder à l'information ou aux informations associée(s).

Par exemple, chaque information est, par exemple, une donnée numérique, tel qu'une valeur textuelle, une valeur de mesure, une image, un widget graphique (un composant d'interface graphique, un élément visuel d'une interface graphique, soit un bouton, un ascenseur, une liste déroulante ou autre), un lien hypertexte, une représentation d'un circuit électrique, hydraulique ou pneumatique, ou tout type de document, vidéo ou autre, ou toute donnée pertinente pour l'affichage en réalité augmentée. Par exemple, au moins une information est une indication d'un type de dispositif alimenté par un départ électrique associé au point d'intérêt 225, ou encore une information permettant de faire le lien avec le la partie du schéma électrique décrivant l'équipement 10A, 10B.

Par exemple, l'opérateur commande, via l'interface homme-machine, le positionnement de chaque point d'intérêt 225 dans la représentation 220.

A cet effet, un module de positionnement du premier contrôleur 35 propose par exemple à l'opérateur de générer un point d'intérêt 225 et positionne le point d'intérêt 225 dans la représentation 220 en fonction des commandes de l'opérateur.

En particulier, chaque point d'intérêt 225 est positionné sur une première image 45. Par exemple, le point d'intérêt 225 est positionné sur la partie de la première image 45 qui représente l'organe 20A à 20M correspondant, ou à proximité de cette partie.

En variante, au moins un point d'intérêt 225 n'est pas associé à un point précis tel qu'un organe 20A à 20M de l'équipement 10A, 10B considéré. Dans ce cas, le positionnement du point d'intérêt 225 est susceptible de varier.

Le module de positionnement propose également à l'opérateur d'entrer les informations dans l'interface homme-machine et intègre les informations dans le point d'intérêt 225, ou de sélectionner les informations parmi une liste d'informations prédéfinie.

En variante, chaque point d'intérêt 225 est sélectionné par l'opérateur dans une liste de points d'intérêts 225 prédéfinie et mémorisée dans la première mémoire 55.

Selon une autre variante, le module de positionnement est configuré pour reconnaître, sur les images 45, des organes 20A à 20M associés à des points d'intérêts 225, et pour positionner le ou les points d'intérêt 225 correspondants à proximité des organes 20A à 20M sur les premières images 45 qui ont été superposées aux faces des gabarits 210.

En complément facultatif, chaque première image 45 superposée est cachée, par le module de génération, après que tous les points d'intérêt 225 ont été positionnés. Par exemple, chaque première image 45 superposée est rendue invisible ou partiellement voire complètement transparente.

A l'issue de la première étape de génération, la représentation 220, comportant les gabarits 210 et les points d'intérêt 225, et optionnellement les premières images 45 superposées aux faces des gabarits 210, est transmise au deuxième contrôleur 80, qui la stocke dans la première mémoire 90.

Lors de la deuxième étape de fourniture 140, au moins une deuxième image de l'équipement 10A, 10B, par exemple une image du lieu contenant les équipements 10A, 10B, est fournie au deuxième contrôleur 80.

Par exemple, le deuxième imageur 70 acquiert une image du lieu ou une pluralité d'images successives du lieu, et transmet chaque image du lieu au deuxième contrôleur 80. L'ensemble des images du lieu acquises lors de la deuxième étape de fourniture 140 forme, par exemple, un signal vidéo.

Lors de l'étape de détection 150, un module de détection, qui fait partie du deuxième contrôleur 80 et est, par exemple, formé par des instructions logicielles exécutées sur le deuxième processeur 85, détecte, dans au moins une image du lieu, par exemple dans chaque image du lieu, une deuxième image d'un équipement 10A, 10B ou d'une partie de l'équipement 10A, 10B.

Par exemple, le module de détection détecte une position et une orientation du deuxième imageur 70 dans l'espace au moment où l'image du lieu est acquise, et en déduit qu'une partie de l'image du lieu est une deuxième image de l'équipement 10A, 10B.

Par exemple, le module de détection détecte la position et l'orientation à l'aide de signaux fournis par un système de positionnement par satellites, ou encore d'un sytème de positionnement spécifique au lieu considéré, voire d'un système tel qu'un lidar. En variante, le lieu comporte des étiquettes ou d'autres éléments reconnaissables sur une image, et identifiant chacun un point de référence du lieu, le module de détection reconnait ces étiquettes et autres éléments sur l'image du lieu et en déduit le positionnement et l'orientation dans l'espace du deuxième imageur 70.

Selon un mode de réalisation, le module de détection reconnaît des points remarquables du lieu et estime leur position par triangulation à partir d'un ensemble d'images du lieu.

De manière connue en soit, au cours de la deuxième étape de génération 160, le deuxième contrôleur 80 génère, par exemple à l'aide d'un module de génération dédié, au moins une image appelée image enrichie. Par exemple, le deuxième contrôleur 80 génère une image enrichie pour chaque image du lieu.

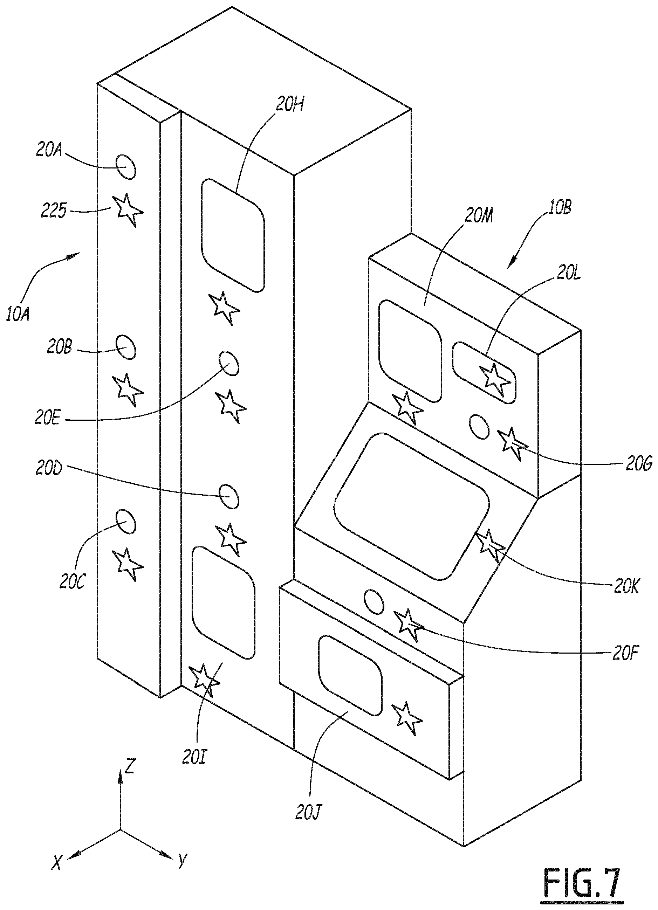

La figure 7 présente un exemple d'une telle image enrichie des deux équipements 10A, 10B.

Chaque image enrichie est générée à partir de la représentation 220 de l'équipement 10A, 10B correspondant.

Chaque image enrichie est obtenue en superposant, sur chaque deuxième image, la représentation 220 de l'équipement 10A, 10B correspondant. On voit notamment sur la figure 7 que les points d'intérêt 225 sont visibles sur les deuxièmes images des équipements 10A, 10B.

Selon un mode de réalisation, la ou les premières(s) images 45 contenues dans la représentation sont rendues partiellement ou totalement transparentes dans l'image enrichie, de manière à ce que la troisième image de l'équipement 10A, 10B ne soit pas totalement cachée dans l'image enrichie.

Il est bien évident que la superposition de la représentation 220 à l'image de l'équipement 10A, 10B est telle que les points d'intérêt 225 sont disposés sur ou à proximité immédiates des parties des deuxièmes images qui représentent les éléments ou organes 20A à 20M associés aux points d'intérêt 225.

Au cours de l'étape d'affichage 170, chaque image enrichie est affichée sur l'écran 75. Ainsi, les points d'intérêt 225 sont visibles en superposition sur chaque troisième image affichée.

Les étapes 180 à 200 sont mises en œuvre, de manière optionnelle, suite à une modification d'au moins un équipement 10A, 10B entraînant une modification de la représentation 220 de cet équipement 10A, 10B. Par exemple, un organe 20A à 20M a été modifié, supprimé ou ajouté, et il est nécessaire de modifier, supprimer ou ajouter un point d'intérêt 225 en conséquence.

Au cours de la troisième étape de fourniture 180, une troisième image de l'équipement 10A, 10B est fournie, par exemple grâce au premier imageur 30, de manière similaire à la première étape de fourniture 100.

Au cours de la deuxième étape de superposition 190, la troisième image est superposée à une face du gabarit 210 de l'équipement 10A, 10B correspondant, en remplaçant le cas échéant une éventuelle première image 45 qui serait déjà superposée à cette face, de manière similaire à la première étape de superposition 120.

Enfin, lors de la deuxième étape de positionnement 200, au moins un point d'intérêt 225 contenant une information relative à l'équipement modifié est positionné sur la représentation 220 postérieurement à la deuxième étape de superposition 190.

Grâce à l'utilisation de gabarits 210 constitués d'un ou d'une pluralité de parallélépipèdes, le procédé ne nécessite que la gestion d'une quantité limitée de données dans les contrôleurs 35 et 80. En effet, des parallélépipèdes sont définissables par peu d'informations, ce qui limite la taille (en termes de quantité d'informations) de la représentation 220 et la rend aisée à manipuler.

En outre, la génération de chaque représentation 220 est très rapide, puisqu'il suffit d'acquérir quelques images, de mesurer les dimensions de l'équipement 10A, 10B, de générer un ou plusieurs parallélépipèdes reproduisant approximativement l'équipement 10A, 10B, de superposer les images aux faces correspondantes des parallélépipèdes et de positionner les points d'intérêt visuellement sur ces images.

Le fait de superposer au moins une image 45 de l'équipement à une ou plusieurs faces des parallélépipèdes 215A à 215C permet un positionnement précis dans l'espace des points d'intérêt 225, puisque lors de ce positionnement les différents organes 20A à 20M sont visibles pour l'opérateur.

De plus, la majorité des équipements 10A, 10B industriels comportent de nombreux éléments dont les formes approchent des parallélépipèdes, et qui peuvent donc être simulées par des parallélépipèdes sans perdre trop de précision dans le placement des points d'intérêt 225. Lorsque les formes des équipements 10A, 10B sont complexes, l'utilisation d'une pluralité de parallélépipèdes permet en général de générer un gabarit 210 dont la forme est suffisamment proche de celle de l'équipement pour permette un placement acceptable des points d'intérêt 225.

De plus, lorsqu'il s'avère nécessaire de modifier la représentation 220 suite à la modification d'un équipement 10A, 10B, il est aisé de positionner précisément la nouvelle image dans la représentation 220, puisqu'il suffit de la superposer à la face correspondante du gabarit 210 préexistant.

Un redressement des images 45 permet de mieux superposer l'image au gabarit 210 et donc d'améliorer la précision de positionnement des points d'intérêt 225.

Selon une variante, l'étape de détection 150 n'est pas mise en œuvre. Dans ce cas, c'est par exemple l'opérateur qui affiche la représentation 220 sur l'écran 75 pour la superposer à la deuxième image de l'équipement 10A, 10B correspondant en déplaçant le deuxième imageur 70 dans l'espace jusqu'à ce que la représentation 220 et la troisième image soient superposées l'une à l'autre, ou encore en déplaçant et en faisant pivoter sur l'écran 75 la représentation 220.

Selon une autre variante, seules les arêtes des gabarits 210 et les points d'intérêt 225 sont affichés pour permettre à l'opérateur de superposer précisément la représentation 220 à la deuxième image.

En complément facultatif, lorsque l'opérateur a superposé la représentation 220 à la deuxième image, l'opérateur indique au contrôleur 80 que la superposition est effectuée. Le contrôleur 80 mémorise alors la position de la représentation 220 dans l'espace et transmet des informations de positionnement de la représentation 220 au contrôleur 35, qui les mémorise dans la mémoire 55. Ainsi, l'étape de positionnement de la représentation 220 par l'opérateur n'aura pas à être répétée ultérieurement et sera remplacée par l'étape de détection 150.

## Revendications

1. Procédé de gestion de l'affichage, sur un écran (75) d'un système électronique (25), d'au moins une information relative à un équipement (10A, 10B) disposé dans un lieu, le procédé comportant:
- une première étape de fourniture (100) à une unité de traitement de données (35) d'au moins une première image (45) de l'équipement (10A, 10B),
- une première étape de génération (110), par l'unité de traitement de données (35), dans une mémoire (55) du système (25), d'une représentation du lieu comportant au moins un gabarit (210) de l'équipement (10A, 10B), le gabarit étant constitué d'un parallélépipède (215A, 215B, 215C) ou d'une pluralité de parallélépipèdes (215A, 215B, 215C), chaque parallélépipède (215A, 215B, 215C) présentant six faces,
- une étape de superposition (120) de la première image (45) sur une face du gabarit (210) pour former une représentation (220) de l'équipement,
- une première étape de positionnement (130), sur la représentation (220) de l'équipement (10A, 10B), d'au moins un point d'intérêt (225), chaque point d'intérêt (225) comportant au moins une information à afficher relative à l'équipement (10A, 10B),
- une deuxième étape de génération (160), par un contrôleur (85), d'une image enrichie à partir de la représentation (220) de l'équipement (10A, 10B), l'image enrichie étant obtenue en superposant sur une deuxième image, la représentation de l'équipement, la deuxième image étant une image du lieu contenant l'équipement, et
- une étape d'affichage (170) de l'image enrichie sur l'écran (75) du système électronique (25),
dans lequel dans l'image enrichie, la première image (45) superposée est partiellement transparente au cours de l'étape d'affichage (170) de l'image enrichie.

2. Procédé selon la revendication 1, dans lequel la première étape de superposition (120) comporte un redressement de la première image (45).

3. Procédé selon la revendication 1 ou 2, comportant, en outre :
- une étape de modification de l'équipement (10A, 10B), postérieure à la première étape de positionnement (130),
- une deuxième étape de fourniture (180) d'une troisième image de l'équipement (10A, 10B) modifié,
- une étape de remplacement (190), dans la représentation (220) de l'équipement (10A, 10B), de la première image (45) par la troisième image, et
- une deuxième étape de positionnement (200), sur la représentation (220) de l'équipement (10A, 10B), d'au moins un point d'intérêt (225) comportant au moins une information à afficher relative à l'équipement (10A, 10B) modifié.

4. Procédé selon l'une quelconque des revendications 1 à 3, dans lequel la première étape de positionnement (130) comporte le positionnement d'au moins un point d'intérêt (225) sur la première image (45) superposée à une face du gabarit (210).

5. Procédé selon l'une quelconque des revendications précédentes, dans lequel la première étape de fourniture (100) comporte la fourniture d'une pluralité de premières images (45) de l'équipement (10A, 10B), le gabarit (210) comportant une pluralité de parallélépipèdes (215A, 215B, 215C) en contact les uns avec les autres, la première étape de superposition (120) comportant la superposition, sur chacune d'au moins deux faces desdits parallélépipèdes (215A, 215B, 215C), d'une première image (45) respective.

6. Produit programme d'ordinateur (60) contenant des instructions logicielles configurées pour mettre en œuvre un procédé selon l'une quelconque des revendications précédentes lorsque les instructions sont exécutées sur un processeur (50, 85).

7. Support d'informations (65) sur lequel sont mémorisées des instructions logicielles configurées pour mettre en œuvre un procédé selon l'une quelconque des revendications 1 à 5 lorsque les instructions sont exécutées sur un processeur (50, 85).

8. Système (25) d'affichage d'informations comportant une unité de traitement d'informations (35), une mémoire (55), au moins un imageur (30), l'unité de traitement d'informations (35) étant configurée pour :
- recevoir de l'au moins un imageur (30) au moins une première image (45) de l'équipement (10A, 10B),
- générer, dans la mémoire (55), une représentation du lieu comportant au moins un gabarit (210) de l'équipement (10A, 10B), le gabarit (210) étant constitué par un parallélépipède (215A, 215B, 215C) ou une pluralité de parallélépipèdes(215A, 215B, 215C), chaque parallélépipède (215A, 215B, 215C) présentant six faces,
- superposer la première image (45) sur une face du gabarit (210) pour former une représentation (220) de l'équipement (10A, 10B),
- positionner, sur la représentation (220) de l'équipement (10A, 10B), au moins un point d'intérêt (225), chaque point d'intérêt (225) comportant au moins une information à afficher relative à l'équipement (10A, 10B), et
- transmettre la représentation (220) à un dispositif d'affichage (40),le système comportant, en outre, un dispositif d'affichage (40) comprenant un écran d'affichage (75) et un contrôleur (80), dans lequel l'unité de traitement d'informations (35) est configurée pour transmettre la représentation (220) au dispositif d'affichage (40),
le contrôleur (80) étant configuré pour :
- générer une image enrichie à partir de la représentation (220) de l'équipement (10A, 10B), l'image enrichie étant obtenue en superposant sur une deuxième image, la représentation de l'équipement, la deuxième image étant une image du lieu contenant l'équipement, et
- commander un affichage de l'image enrichie sur l'écran (75), la première image (45) superposée étant partiellement transparente dans l'image enrichie.

## Patentansprüche

1. Verfahren zur Verwaltung der Anzeige, auf einem Bildschirm (75) eines elektronischen Systems (25), von wenigstens einer Information bezüglich einer Ausrüstung (10A, 10B), die an einem Ort angeordnet ist, wobei das Verfahren umfasst:
- einen ersten Schritt des Bereitstellens (100) an eine Datenverarbeitungseinheit (35) von wenigstens einem ersten Bild (45) der Ausrüstung (10A, 10B),
- einen ersten Schritt des Erzeugens (110), durch die Datenverarbeitungseinheit (35), in einem Speicher (55) des Systems (25), einer Darstellung des Ortes, umfassend wenigstens eine Schablone (210) der Ausrüstung (10A, 10B), wobei die Schablone aus einem Parallelepiped (215A, 215B, 215C) oder aus einer Vielzahl von Parallelepipeden (215A,215B, 215C) besteht, wobei jedes Parallelepiped (215A, 215B, 215C) sechs Flächen aufweist,
- einen Schritt des Überlagerns (120) des ersten Bildes (45) auf eine Fläche der Schablone (210), um eine Darstellung (220) der Ausrüstung zu bilden,
- einen ersten Schritt des Positionierens (130), auf der Darstellung (220) der Ausrüstung (10A, 10B), von wenigstens einem Interessenspunkt (225), wobei jeder Interessenspunkt (225) wenigstens eine anzuzeigende Information bezüglich der Ausrüstung (10A, 10B) umfasst,
- einen zweiten Schritt des Erzeugens (160), durch eine Steuerung (85), eines angereicherten Bildes ausgehend von der Darstellung (220) der Ausrüstung (10A, 10B), wobei das angereicherte Bild durch Überlagern, auf ein zweites Bild, der Darstellung der Ausrüstung erhalten wird, wobei das zweite Bild ein Bild des Ortes ist, der die Ausrüstung enthält, und
- einen Schritt des Anzeigens (170) des angereicherten Bildes auf dem Bildschirm (75) des Systems elektronischen (25),
wobei in dem angereicherten Bild das überlagerte erste Bild (45) während des Schritts des Anzeigens (170) des angereicherten Bildes teilweise transparent ist.

2. Verfahren nach Anspruch 1, wobei der erste Schritt des Überlagerns (120) ein Entzerren des ersten Bildes (45) umfasst.

3. Verfahren nach Anspruch 1 oder 2, ferner umfassend:
- einen Schritt des Modifizierens der Ausrüstung (10A, 10B), der dem ersten Schritt des Positionierens (130) nachfolgt,
- einen zweiten Schritt des Bereitstellens (180) eines dritten Bildes der modifizierten Ausrüstung (10A, 10B),
- einen Schritt des Ersetzens (190), in der Darstellung (220) der Ausrüstung (10A, 10B), des ersten Bildes (45) durch das dritte Bild, und
- einen zweiten Schritt des Positionierens (200), auf der Darstellung (220) der Ausrüstung (10A, 10B), von wenigstens einem Interessenspunkt (225), umfassend wenigstens eine anzuzeigende Information bezüglich der modifizierten Ausrüstung (10A, 10B).

4. Verfahren nach einem der Ansprüche 1 bis 3, wobei der erste Schritt des Positionierens (130) das Positionieren von wenigstens einem Interessenspunkt (225) auf dem ersten Bild (45), das einer Fläche der Schablone (210) überlagert ist, umfasst.

5. Verfahren nach einem der vorhergehenden Ansprüche, wobei der erste Schritt des Bereitstellens (100) das Bereitstellen einer Vielzahl von ersten Bildern (45) der Ausrüstung (10A, 10B) umfasst, wobei die Schablone (210) eine Vielzahl von Parallelepipeden (215A, 215B, 215C) umfasst, die miteinander in Kontakt sind, wobei der erste Schritt des Überlagerns (120) das Überlagern, auf jede von wenigstens zwei Flächen der Parallelepipede (215A, 215B, 215C), eines jeweiligen ersten Bildes (45) umfasst.

6. Computerprogrammprodukt (60), enthaltend Softwareanweisungen, die konfiguriert sind, um ein Verfahren nach einem der vorhergehenden Ansprüche umzusetzen, wenn die Anweisungen auf einem Prozessor (50, 85) ausgeführt werden.

7. Informationsträger (65), auf dem Softwareanweisungen gespeichert sind, die konfiguriert sind, um ein Verfahren nach einem der Ansprüche 1 bis 5 umzusetzen, wenn die Anweisungen auf einem Prozessor (50, 85) ausgeführt werden.

8. System (25) zur Anzeige von Informationen, umfassend eine Einheit zur Verarbeitung von Informationen (35), einen Speicher (55), wenigstens einen Bildgeber (30), wobei die Einheit zur Verarbeitung von Informationen (35) konfiguriert ist zum:
- Empfangen, von dem wenigstens einen Bildgeber (30), von wenigstens einem ersten Bild (45) der Ausrüstung (10A, 10B),
- Erzeugen, in dem Speicher (55), einer Darstellung des Ortes, umfassend wenigstens eine Schablone (210) der Ausrüstung (10A, 10B), wobei die Schablone (210) durch ein Parallelepiped (215A, 215B, 215C) oder eine Vielzahl von Parallelepipeden (215A, 215B, 215C) gebildet ist, wobei jedes Parallelepiped (215A, 215B, 215C) sechs Flächen aufweist,
- Überlagern des ersten Bildes (45) auf eine Fläche der Schablone (210), um eine Darstellung (220) der Ausrüstung (10A, 10B) zu bilden,
- Positionieren, auf der Darstellung (220) der Ausrüstung (10A, 10B), von wenigstens einem Interessenspunkt (225), wobei jeder Interessenspunkt (225) wenigstens eine anzuzeigende Information bezüglich der Ausrüstung (10A, 10B) umfasst, und
- Übertragen der Darstellung (220) an eine Anzeigevorrichtung (40), das System umfassend ferner eine Anzeigevorrichtung (40), umfassend einen Anzeigebildschirm (75) und eine Steuerung (80), wobei die Einheit zur Verarbeitung von Informationen (35) konfiguriert ist, um die Darstellung (220) an die Anzeigevorrichtung (40) zu übertragen, wobei die Steuerung (80) konfiguriert ist zum:
- Erzeugen eines angereicherten Bildes ausgehend von der Darstellung (220) der Ausrüstung 10A, 10B), wobei das angereicherte Bild durch Überlagern, auf ein zweites Bild, der Darstellung der Ausrüstung erhalten wird, wobei das zweite Bild ein Bild des Ortes ist, der die Ausrüstung enthält, und
- Steuern einer Anzeige des angereicherten Bildes auf dem Bildschirm (75), wobei das überlagerte erste Bild (45) in dem angereicherten Bild teilweise transparent ist.

## Claims

1. Method for managing the display, on a screen (75) of an electronic system (25), of at least one item of information relating to equipment (10A, 10B) disposed in a location, the method comprising:
- a first step of providing (100) to a data processing unit (35) at least one first image (45) of the equipment (10A, 10B),
- a first step of generating (110), by the data processing unit (35), in a memory (55) of the system (25), a representation of the location comprising at least one template (210) of the equipment (10A, 10B), the template being constituted by a parallelepiped (215A, 215B, 215C) or by a plurality of parallelepipeds (215A, 215B, 215C), each parallelepiped (215A, 215B, 215C) having six faces,
- a step of superimposing (120) the first image (45) on a face of the template (210) to form a representation (220) of the equipment,
- a first step of positioning (130), on the representation (220) of the equipment (10A, 10B), at least one point of interest (225), each point of interest (225) comprising at least one item of information to be displayed relating to the equipment (10A,10B),
- a second step of generating (160), by a controller (85), an enriched image from the representation (220) of the equipment (10A, 10B), the enriched image being obtained by superimposing on a second image, the representation of the equipment, the second image being an image of the location containing the equipment, and
- a step of displaying (170) the enriched image on the screen (75) of the system electronic (25),
wherein, in the enriched image, the superimposed first image (45) is partially transparent during the step of displaying (170) the enriched image.

2. Method according to claim 1, wherein the first step of superimposing (120) comprises rectification of the first image (45).

3. Method according to claim 1 or 2, further comprising:
- a step of modifying the equipment (10A, 10B), subsequent to the first positioning step (130),
- a second step of providing (180) a third image of the modified equipment (10A, 10B),
- a step of replacing (190), in the representation (220) of the equipment (10A, 10B), the first image (45) with the third image, and
- a second step of positioning (200), on the representation (220) of the equipment (10A, 10B), at least one point of interest (225) comprising at least one item of information to be displayed relating to the modified equipment (10A, 10B).

4. Method according to any one of claims 1 to 3, wherein the first step of positioning (130) comprises the positioning of at least one point of interest (225) on the first image (45) superimposed on a face of the template (210).

5. Method according to any one of the preceding claims, wherein the first step of providing (100) comprises the provision of a plurality of first images (45) of the equipment (10A, 10B), the template (210) comprising a plurality of parallelepipeds (215A, 215B, 215C) in contact with one another, the first step of superimposing (120) comprising the superimposition, on each of at least two faces of said parallelepipeds (215A, 215B, 215C), of a respective first image (45).

6. Computer program product (60) containing software instructions configured to implement a method according to any one of the claims preceding when the instructions are executed on a processor (50, 85).

7. Information medium (65) on which software instructions are stored configured to implement a method according to any one of claims 1 to 5 when the instructions are executed on a processor (50, 85).

8. System (25) for displaying information comprising an information processing unit (35), a memory (55), at least one imager (30), the information processing unit (35) being configured to:
- receive from the at least one imager (30) at least one first image (45) of the equipment (10A, 10B),
- generate, in the memory (55), a representation of the location comprising at least one template (210) of the equipment (10A, 10B), the template (210) being constituted by a parallelepiped (215A, 215B, 215C) or a plurality of parallelepipeds (215A, 215B, 215C), each parallelepiped (215A, 215B, 215C) having six faces,
- superimpose the first image (45) on a face of the template (210) to form a representation (220) of the equipment (10A, 10B),
- position, on the representation (220) of the equipment (10A, 10B), at least one point of interest (225), each point of interest (225) comprising at least one item of information to be displayed relating to the equipment (10A, 10B), and
- transmit the representation (220) to a display device (40), the system further comprising a display device (40) comprising a display screen (75) and a controller (80), wherein the information processing unit (35) is configured to transmit the representation (220) to the display device (40), the controller (80) being configured to:
- generate an enriched image from the representation (220) of the equipment (10A, 10B), the enriched image being obtained by superimposing on a second image, the representation of the equipment, the second image being an image of the location containing the equipment, and
- command a display of the enriched image on the screen (75), the superimposed first image (45) being partially transparent in the enriched image.
